# FASCICULE DE BREVET EUROPEEN

(11) **EP 4 445 724 B1**
(45) Date de publication et mention de la délivrance du brevet: **18.06.2025**
(21) Numéro de dépôt: 23214405.5
(22) Date de dépôt: 05.12.2023
(51) Int. Cl.: A01K 1/00, A22B 1/00

(54) **COULOIR D'AMENÉE D'ANIMAUX POUR ABATTOIRS**
TIERTREIBWEG FÜR SCHLACHTHAUSE
ANIMAL RUNWAY FOR SLAUGHTERHOUSES

(30) Priorité: 13.04.2023 FR 2303687
(43) Date de publication de la demande: 16.10.2024
(73) Titulaire: Mirus, 42380 Luriecq (FR)
(72) Inventeur: AMSTOUTZ, Gérard, 42380 LURIECQ (FR)
(74) Mandataire: Cabinet Laurent & Charras

(56) Documents cités:
- EP-A1- 0 784 929
- US-A- 3 805 741
- US-B1- 10 765 085

## Description

### Domaine technique

L'invention se rapporte au domaine technique des installations d'élevage ou des abattoirs, et plus particulièrement à un couloir d'amenée d'une telle installation.

### Art antérieur

Dans les installations d'élevage et les abattoirs, il est nécessaire de faire circuler les bêtes.

Des couloirs d'amenée permettent de faire circuler des bêtes vers une salle particulière de l'installation. Par exemple dans une installation d'élevage, il peut s'agir de la salle de traite. Dans un abattoir, il peut s'agir du box d'abattage.

Une difficulté réside dans la manière de faire avancer les bêtes au sein de ce couloir d'amenée. L'environnement peut être stressant ou effrayant pour les bêtes, de sorte qu'elles refusent d'avancer.

Ce phénomène est particulièrement présent dans le cas d'un abattoir.

Il est connu de l'art antérieur différentes techniques pour faire avancer les bêtes au sein d'un couloir d'amenée. Parfois, les opérateurs utilisent des bâtons pour frapper les bêtes, ou encore des piles pour infliger aux bêtes une décharge électrique, dans le but de les faire avancer. Ces actes sont violents et ne respectent pas la dignité de l'animal. Ces actes sont généralement interdits.

De plus en cas de blessure d'un animal, sa peau est abîmée de sorte qu'elle ne pourra pas être utilisée en tant que cuir.

Afin de pallier ces maltraitances, il est connu de l'art antérieur des dispositifs mécanisés permettant de pousser ou de contraindre les bêtes, tels que décrits dans les documents US3805741, WO2015/143522, DE19501413, US20220330513, US6425351, ou EP1129616. Cependant les dispositifs de l'art antérieur ne sont pas satisfaisants en ce qu'ils sont encore trop bruyants et/ou inefficaces.

Dans certains abattoirs, les opérateurs pénètrent dans le couloir d'amenée, avec les bêtes, afin de les pousser manuellement. Le but est d'éviter les maltraitances ainsi que de pallier l'inefficacité de certains systèmes mécaniques. Cependant cette méthode est dangereuse en cas de cavalcade d'une bête. Le risque de blessures est important.

Des perfectionnements des couloirs d'amenées sont donc possibles.

### Exposé de l'invention

L'invention vise à pallier les problèmes de l'art antérieur, notamment en proposant un couloir d'amenée permettant de faire avancer les bêtes de manière efficace, en respectant le bien-être animal, en préservant le cuir, et en protégeant le personnel.

À cet effet il a été mis au point un couloir d'amenée d'animaux d'une installation d'élevage ou d'un abattoir selon la revendication 1, le couloir comprenant un chariot de poussée des animaux au moyen d'une barrière, et déplaçable dans le couloir par une liaison glissière.

Selon l'invention, la liaison glissière est actionnée par un système pignon et crémaillère, la liaison glissière comprend des éléments de roulement disposés au contact d'une face supérieure d'un élément de guidage de la liaison, et supportent tout ou partie du poids du chariot, et les éléments de roulement et/ou la face supérieure de l'élément de guidage comprennent un élastomère ou un polymère.

De cette manière, le déplacement du chariot est particulièrement silencieux car le poids du chariot est supporté par des éléments de roulement tels que des galets réducteurs de bruit. Le déplacement du chariot étant la source principale du bruit effrayant les animaux dans un couloir d'amenée, l'invention permet d'obtenir un couloir d'amenée efficace, et respectant le bien-être animal.

Ensuite, un système de pignons et crémaillères est plus silencieux qu'un système de chaîne. En effet, l'engrènement des dents du pignon et des dents de la crémaillère se fait par roulement sans glissement, alors qu'un système de pignons et de chaînes implique un choc à chaque accostage d'un maillon sur le pignon, notamment dû à l'effet polygonal dû à la longueur du pas de la chaîne. Une transmission par chaîne est donc implicitement plus bruyante qu'une transmission par crémaillère. Il en est de même pour les systèmes pneumatiques, dont la mise à l'échappement est bruyante.

Dans un mode de réalisation préférée, la barrière est pivotante entre une position d'obturation du couloir, et une position de dégagement du couloir. De cette manière, le chariot est de construction simple. L'encombrement est réduit, car l'amplitude du mouvement de la barrière est inscrite dans le gabarit du couloir. Les inconvénients des systèmes décrits dans les documents WO2015/143522 et DE19501413, par exemple, sont évités. Dans ces systèmes, une porte coulissante dépasse du gabarit du couloir, ou encore un système de recirculation d'un convoyeur double l'encombrement au sol.

De préférence, la barrière est disposée sur une paroi latérale du couloir et la barrière pivote autour d'un axe vertical, ce qui garantit qu'une bête ne peut pas se coucher sous le chariot. L'efficacité du couloir est donc améliorée.

Le couloir comprend avantageusement, sur une paroi opposée à celle recevant la barrière, un portillon pivotant autour d'un axe vertical entre une position d'obturation du couloir et une position de dégagement du couloir. Un tel portillon permet d'éviter qu'une bête ne recule au sein du couloir d'amenée. Ainsi, une bête engagée dans le couloir et ayant franchi un premier portillon ne peut avancer que dans la direction d'amenée de ce couloir.

Afin d'amortir les mouvements de la barrière et/ou du portillon, la liaison pivot de la barrière et/ou du portillon comprend un vérin du type ferme-porte pour le ramener en position d'obturation. Un tel ferme-porte, communément appelé selon l'anglicisme « groom », est basé une circulation interne d'un fluide tel que de l'huile, en circuit fermé, entre deux chambres du groom. Plus l'amplitude du mouvement du groom est importante, plus le fluide est comprimé au sein de la chambre correspondante, ce qui s'oppose au mouvement du groom. De cette manière, un groom constitue un amortisseur du mouvement de la barrière et/ou du portillon. Il n'est donc pas possible de faire claquer la barrière ou le portillon contre une paroi du couloir. Les claquements des barrières dans les installations d'élevage ou les abattoirs étant une source importante de bruit, l'utilisation d'un groom est particulièrement avantageuse.

Par défaut, la barrière et les portillons ne sont pas motorisés, et ne s'ouvrent que sous la poussée exercée par une bête cherchant à avancer dans le couloir. Mais une barrière ou un portillon en position d'obturation peuvent rebuter une bête. Afin de l'inciter à avancer au sein du couloir, la barrière et/ou le portillon est motorisé, afin de les placer en position de dégagement, ce qui incite la bête à avancer.

Pour éviter les accidents et les blessures des bêtes, chaque motorisation comprend un limiteur d'effort.

Dans un mode de réalisation, la liaison pivot du portillon et/ou de la barrière, comprend une butée sous forme de came, limitant son amplitude entre la position d'obturation et la position de dégagement. La géométrie de la butée sous forme de came permet à la butée d'accoster progressivement la partie antagoniste limitant son mouvement. Un choc bruyant est donc évité.

Toujours dans un but de ne pas effrayer les animaux, la barrière et/ou le portillon présente une couleur neutre, par exemple grise, et anti-reflet. Les animaux étant généralement effrayés par les couleurs vives, ou encore par les reflets de la lumière sur des surfaces brillantes, le choix d'un revêtement adapté de la barrière et/ou du portillon permet de ne pas les effrayer.

Dans un mode de réalisation, la motorisation de la liaison pivot de la barrière du chariot est asservie à la position du chariot. Ce mode permet de faire reculer le chariot avec la barrière ouverte, en dégageant le couloir pour inciter la bête avancer, puis de rouvrir progressivement la barrière lorsque le chariot recommence à avancer, sans toutefois blesser une bête suivante. La barrière s'ouvre progressivement entre la bête suivante et la bête à faire avancer.

L'invention concerne également un procédé de pilotage d'un chariot de poussée tel que précité, remarquable en ce qu'il consiste à faire progresser des animaux au sein du couloir selon un cycle du type « pas de pèlerin », et en ce que la position d'une barrière mobile, depuis une position de libération du couloir vers une position d'obturation du couloir, est asservie à la position du chariot au sein du couloir.

### Description des figures

[Fig.1] illustre un couloir d'amenée depuis un parc d'attente vers un box d'abattage.
[Fig.2] illustre un tel couloir vu de dessus.
[Fig.3] illustre un tel couloir vu de face.
[Fig.4] illustre un chariot de poussée d'un tel couloir.
[Fig.5] est une vue partielle illustrant la liaison glissière et la motorisation d'un tel chariot.
[Fig.6] est une autre vue partielle d'un tel chariot.
[Fig.7] illustre une butée d'une liaison pivot.
[Fig.8] illustre un portillon d'un tel couloir.
[Fig.9] illustre une première étape de la mise en œuvre d'un tel couloir.
[Fig.10] illustre une étape suivante de la mise en œuvre.
[Fig.11] illustre une étape suivante de la mise en œuvre.
[Fig.12] illustre une étape suivante de la mise en œuvre.

### Description détaillée de l'invention

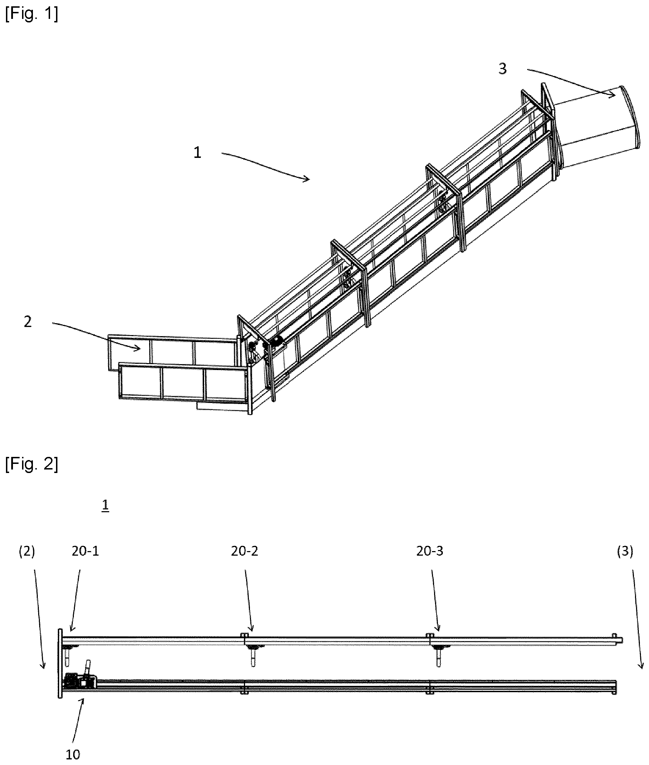

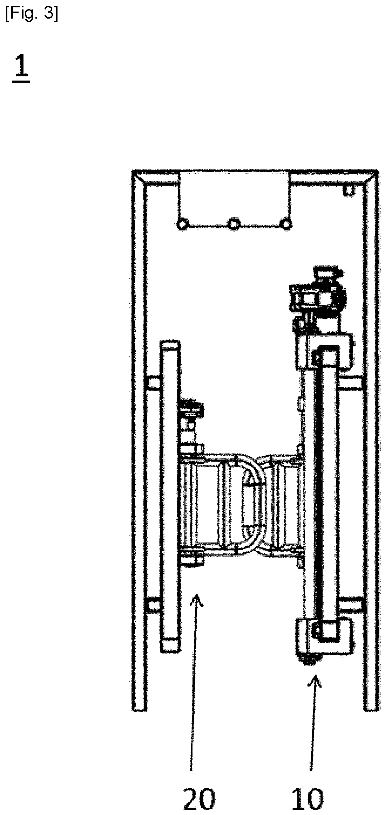

En référence aux figures 1 à 3, l'invention se rapporte à un couloir d'amenée (1) perfectionné. Dans le mode de réalisation préféré illustré, le couloir (1) relie un parc (2) à un poste d'abattage (3).

Le couloir (1) comprend un chariot de poussée (10) muni d'une barrière (101) mobile entre une position d'obturation du couloir (1), et une position de dégagement du couloir (1). Le chariot (10) se déplace en translation dans le couloir (1), au moyen d'une liaison glissière et d'une motorisation.

Des portillons (20) anti-retours sont de préférence disposés dans le couloir (1) pour garantir qu'une bête ne peut pas reculer une fois qu'elle est engagée dans le couloir (1).

Afin d'éviter qu'une bête se couche dans le couloir (1), et se retrouve coincée sous le chariot (10), la barrière (101) est disposée sur un côté du couloir (1) plutôt qu'au-dessus. Dans ce mode, la barrière (101) mesure plus de la moitié de la largeur du couloir (1) afin de garantir qu'une bête ne soit pas coincée entre la barrière (101) et la paroi opposée du couloir (1).

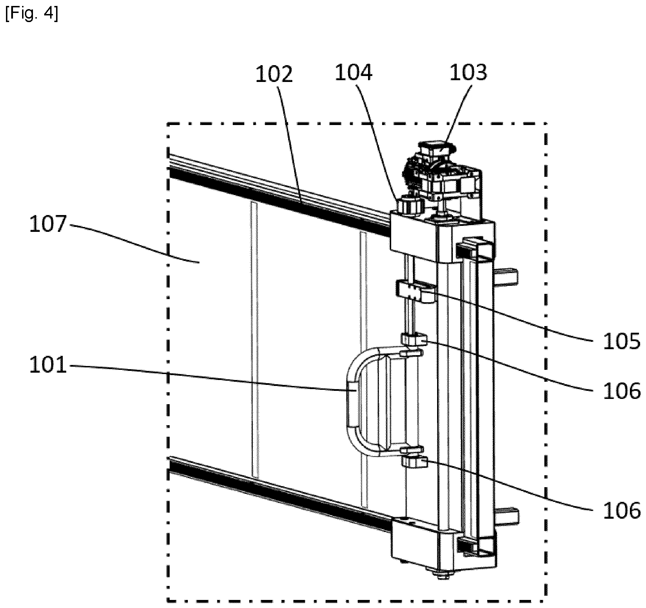

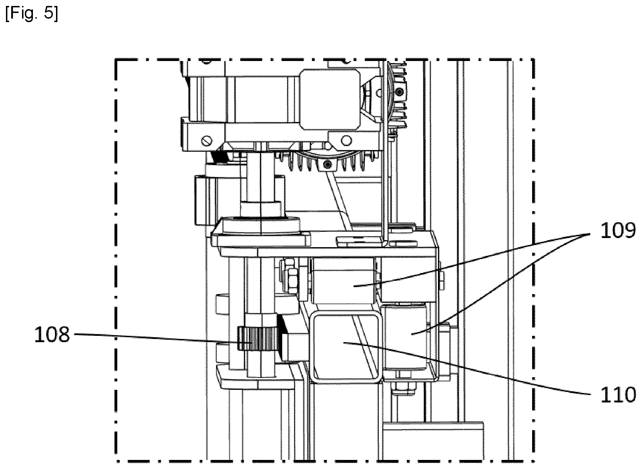

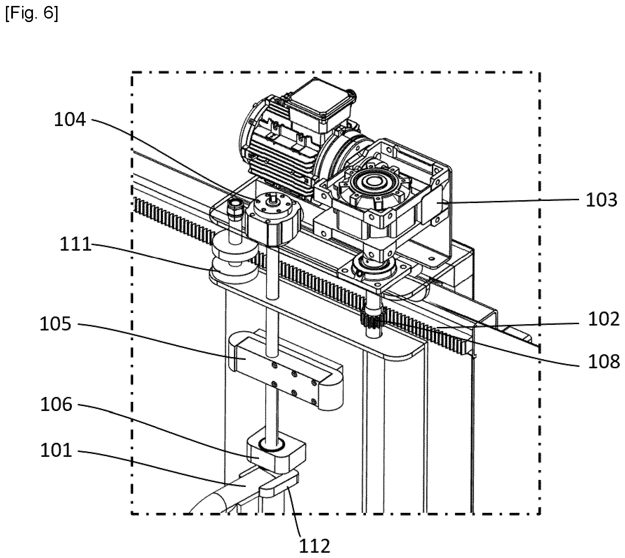

En référence aux figures 4 à 6, le chariot (10) comprend une liaison glissière munie d'éléments de roulement (109) à l'encontre d'un élément de guidage (110).

Au moins un des éléments de roulement (109) est disposé sur une face supérieure de l'élément de guidage (110), de manière à ce que le poids du chariot (10) soit supporté au moins en partie, et de préférence en totalité par l'élément de roulement (109), et non pas par la motorisation du chariot (10). Cette construction garantit que le niveau de bruit émis par la motorisation du chariot (10) ne sera pas augmenté. Si le chariot (10) reposait par exemple sur une liaison pignon-crémaillère, le bruit serait plus important.

L'élément de guidage (110) illustré est un tube de section carrée. D'autres géométries peuvent bien entendu être envisagées, telles qu'une section circulaire ou en H, tant que la composante verticale de l'effort (le poids du chariot (10)) est reprise par les éléments de roulement (109), plutôt que par la motorisation.

De manière à réduire encore le niveau de bruit du chariot (10), les éléments de roulement (109) et/ou la face supérieure de l'élément de guidage (110) comprennent un polymère ou un élastomère. Par exemple, il s'agit de galets revêtus de polyuréthane. De tels éléments de roulement (109) facilitent le déplacement silencieux du chariot (10).

De préférence, la motorisation de la liaison glissière est un système à pignon (108) et crémaillère (102), entrainés par un premier moteur (103). L'engrènement des dents se fait selon une cinématique de roulement sans glissement, ce qui est plus silencieux que les autres solutions de l'art antérieur : les transmissions par chaînes génèrent au moins un cliquetis dû à l'effet polygonal inhérent au pas des maillons, et les vérins pneumatique génèrent des bruits importants lorsqu'ils sont mis à l'échappement.

Avantageusement, la crémaillère (102) est disposée sur une paroi latérale (107) du couloir (1), ce qui permet de disposer un élément de roulement (109) supérieur sur toute la largeur de l'élément de guidage (110). La construction obtenue est compacte et robuste.

Pour augmenter la rigidité de la liaison glissière, elle comprend un premier élément de guidage (110) supérieur, en haut de la paroi latérale (107), et un second élément de guidage (110) inférieur en bas de la paroi (107). Les risques d'arc-boutement du chariot (10) sont évités.

Toujours dans le but d'éviter l'arc-boutement du chariot (10), des galets (111) anti-rotation sont disposés, lorsque le chariot (10) est vu de dessus, d'un côté opposé à celui du pignon (108) de la motorisation. Des éléments de roulement (109) sont respectivement disposés en face des galets (111) anti-rotation et du pignon (108). La liaison obtenue est particulièrement résistante.

Afin de diminuer l'encombrement du couloir (1), la barrière (101) est mobile selon une liaison pivot, de préférence autour d'un axe vertical. Ainsi, l'amplitude de son mouvement entre la position de libération et la position d'obturation se situe intégralement à l'intérieur du couloir (1). Des paliers (106) sont disposés à cet effet sur le chariot (10).

Dans un mode de réalisation économique, la liaison pivot de la barrière (101) n'est pas motorisée, de sorte que la barrière (101) ne s'ouvre que sous la poussée exercée par une bête.

Dans le mode de réalisation préféré, la liaison pivot de la barrière (101) est motorisée au moyen d'un second moteur (104), de sorte que la barrière (101) s'ouvre avant que le chariot (10) ne recule chercher la bête suivante. Ainsi, la bête voit un couloir (1) dégagé est n'est pas effrayée par le recul du chariot (10).

Dans les deux cas, la liaison pivot de la barrière (101) comprend un ferme-porte (105) dit « groom » de préférence hydraulique. Dans un tel groom (105), la circulation interne d'un fluide, sous l'action de mouvement de la barrière (101), fournit deux effets :
- la raideur du groom (105) peut être adaptée via la régulation du débit du fluide. Ce réglage permet d'avoir un mouvement fluide de la barrière (101), sans à-coup.
- plus l'amplitude du mouvement de la barrière (101) est grande, plus le fluide est comprimé au sein de la chambre correspondante, et plus le groom (105) s'oppose au mouvement. Ainsi, le groom (105) amortit le mouvement de la barrière (101) et évite son claquement contre une cloison du couloir (1).

Pour limiter l'amplitude du mouvement de la barrière (101), une butée (112) est présente. Avantageusement, la butée (112) présente la forme d'une came, ce qui permet de garantir un contact progressif entre la butée (112) et le couloir (1) évitant là encore un choc, source de bruit.

Une telle butée (112) est de préférence montée sur l'axe de la liaison pivot.

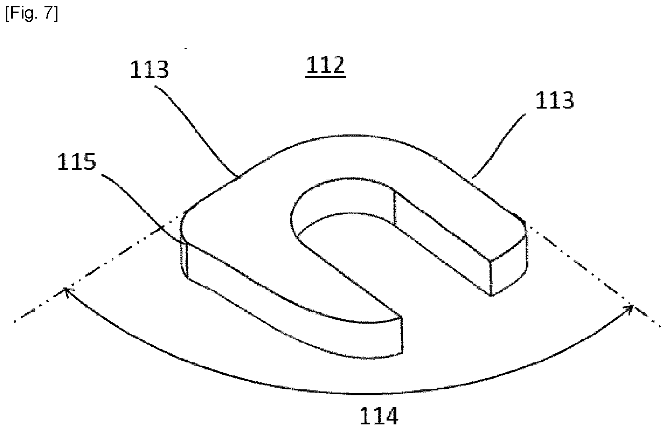

En référence à la figure 7, la butée (112) présente deux surfaces d'appui (113) destinées à buter à l'encontre d'un bâti du chariot (10). Le choix de l'angle (114) entre les deux surfaces définit l'amplitude du mouvement, qui est de préférence de 90°. La présence d'un renflement (115) à la base de la butée permet d'éviter le matage trop important de ladite butée.

Afin de ne pas effrayer les bêtes, la barrière (101) présente un revêtement ou une couleur neutre, de préférence sans reflet. La galvanisation, classiquement utilisée dans le domaine de l'élevage, est évitée car les pièces galvanisées produisent des reflets qui effraient les bêtes. La barrière (101) est par exemple peinte d'une couleur grise.

Selon le modèle de teinte-saturation-valeur utilisé pour définir les couleurs, la couleur de la barrière (101) présente :
- une saturation comprise entre 0 et 50, et de préférence entre 0 et 25.
- une valeur comprise entre 0 et 75, et de préférence entre 25 et 50.

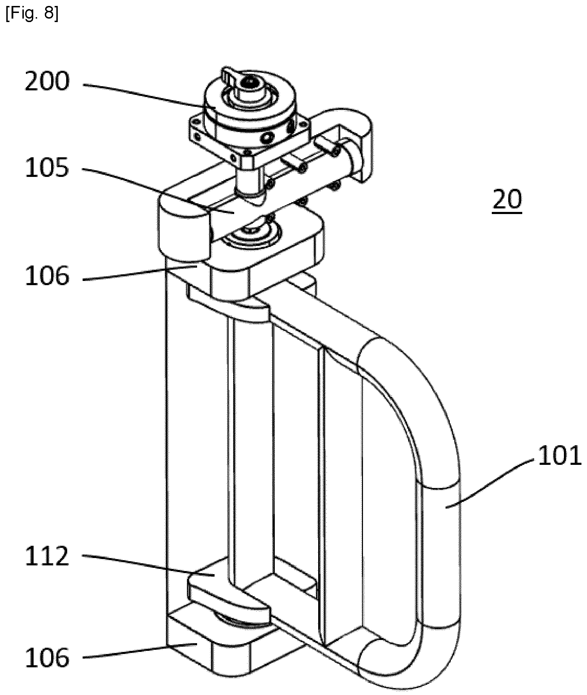

La figure 8 illustre un portillon anti-retour (20). Les portillons anti-retours (20) sont optionnels, mais ils garantissent qu'une bête ne peut pas reculer au sein du couloir (1), ce qui facilite la mise en œuvre de l'invention.

De préférence, le portillon anti-retour (20) est dans l'ensemble identique à la barrière (101) du chariot (10), en ce qu'il est relié au couloir (1) par des paliers (106) réalisant une liaison pivot, notamment autour d'un axe vertical, qu'un groom amortit le mouvement du portillon (20), et qu'une butée (112) limite l'amplitude du mouvement du portillon (20).

De préférence, un vérin rotatif à palettes (200) est agencé en pression/contre-pression pour jouer aussi bien le rôle d'un groom que celui d'un vérin rotatif à palettes. Cela permet, dans le cas d'animaux de petites tailles, de réduire l'effort de poussée sur le portillon (20). Avec un vérin rotatif à palettes, l'effort de poussée peut être inférieur à 20Nm, ce qui est très faible. Le vérin rotatif à palettes contraint le groom (105) à s'ouvrir pour limiter l'effet barrière et faciliter l'avancée des animaux.

Le portillon (20) présente également une couleur neutre de manière à ne pas effrayer les bêtes.

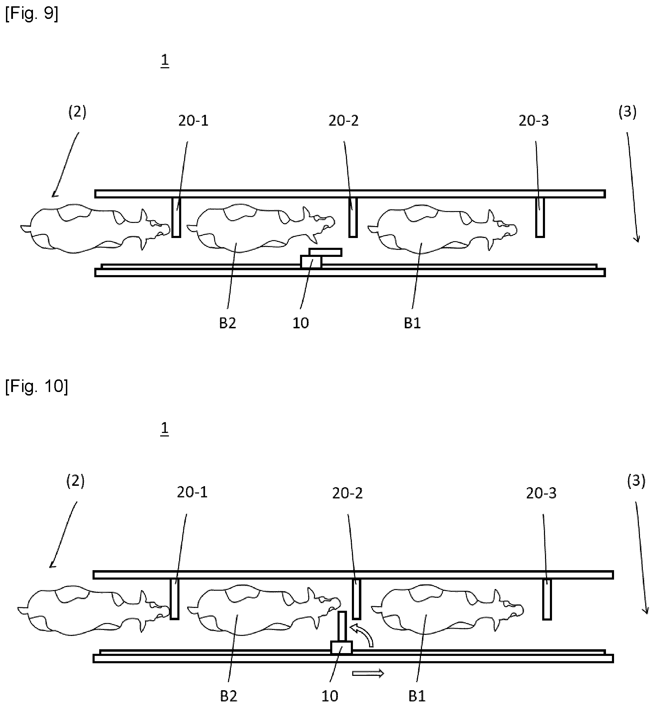

Les figures 9 à 12 illustrent une séquence d'utilisation du couloir (1), sur lesquelles des flèches illustrent le mouvement des pièces.

La figure 9 illustre la première étape, où :
- une première bête (B1) est présente et doit être poussée en direction de la sortie (3) du couloir (1) ;
- une seconde bête (B2) attend son tour ;
- le chariot (10) est en position arrière.

La figure 10 illustre une seconde étape, où le chariot (10) initie son avance. Au fur et à mesure de son avance, la barrière (101) motorisée s'ouvre, de manière à :
- être en position d'obturation lorsque le chariot (10) atteint le second portillon (20-2) retenant la première bête (B1) ;
- ne pas gêner la seconde bête (B2) lors de son ouverture.

La motorisation du pivot de la barrière (101) est donc asservie à la position du chariot (10), selon le principe d'une came numérique : l'ouverture est progressive selon l'avance du chariot (10).

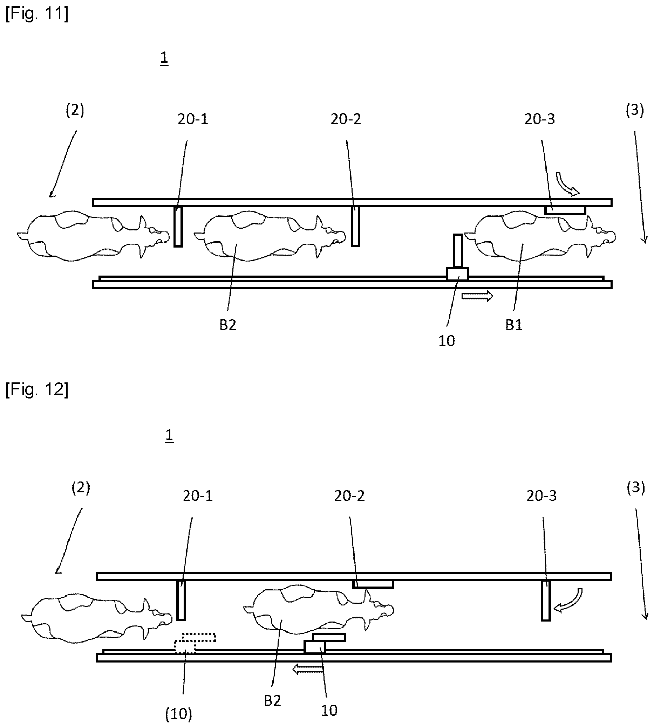

La figure 11 illustre le chariot (10) ayant franchi le second portillon anti-retour (20-2) qui retenait la première bête (B1), et ayant poussé la première bête (B1) au sein du couloir (1). Le troisième portillon anti-retour (20-3) s'est ouvert, soit sous l'action de la première bête (B1) soit sous l'action d'un moteur du troisième portillon (20-3).

La figure 12 illustre le recul du chariot (10) en vue d'aller chercher la seconde bête (B2). On a illustré le cas où la seconde bête (B2) a spontanément avancé au sein du couloir (1), de sorte que le chariot (10) n'a besoin de reculer que jusqu'à l'aplomb du second portillon (20-2). Si jamais la seconde bête (B2) n'a pas avancé, alors le chariot (10) est configuré pour reculer jusqu'à l'aplomb du premier portillon (20-1) ; comme illustré en pointillé.

Lors du recul du chariot (10), la barrière (101) est de préférence amenée en position de libération afin de ne pas effrayer la seconde bête. Cette ouverture motorisée favorise l'avance spontanée de la seconde bête (B2) au sein du couloir (1).

Pour cette même raison, le pivot du premier portillon (20-1) est de préférence motorisé.

Le couloir (1) est équipé de capteur de présence afin de détecter l'avancée spontanée ou non des bêtes, de sorte à adapter la position jusqu'à laquelle doit reculer le chariot (10).

La séquence d'utilisation du couloir (1) correspond à un « pas de pèlerin », dans lequel le chariot (10) fait des allers-retours au sein du couloir (1). Cette séquence rend possible une conception peu encombrante.

De préférence, toutes les motorisations du couloir (1) disposent d'un limiteur d'effort, permettant de stopper le couloir (1) en cas de blocage d'une bête. Les blessures sont donc évitées.

Par ailleurs, le couloir (1) d'amenée (1) peut être conformé différemment des exemples donnés sans sortir du cadre de l'invention, qui est défini par les revendications.

En variante non représentée, le couloir (1) ne présente pas de portillons anti-retours (20).

Selon une autre variante non représentée, les fermes-portes (105) sont mécaniques, et comprennent des ressorts.

En outre, les caractéristiques techniques des différents modes de réalisation et variantes mentionnés ci-dessus peuvent être, en totalité ou pour certaines d'entre elles, combinées entre elles. Ainsi, le couloir (1) d'amenée (1) peut être adapté en termes de coût, de fonctionnalités et de performance.

## Revendications

1. Couloir d'amenée (1) d'animaux d'une installation d'élevage ou d'un abattoir, le couloir (1) comprenant un chariot (10) de poussée des animaux au moyen d'une barrière (101) mobile entre une position d'obturation du couloir (1) et une position de dégagement du couloir (1), le chariot (10) étant déplaçable dans le couloir (1) par une liaison glissière, la liaison glissière comprenant des éléments de roulement (109) disposés au contact d'une face supérieure d'un élément de guidage (110) de la liaison et supportent tout ou partie du poids du chariot, les éléments de roulement (109) et/ou la face supérieure de l'élément de guidage comprenant un élastomère ou un polymère , **caractérisé en ce que** la liaison glissière est actionnée par un système à pignon (108) et crémaillère (102).

2. Couloir (1) selon la revendication 1, ***caractérisé en ce que*** la barrière (101) est pivotante.

3. Couloir (1) selon l'une des revendications précédentes, ***caractérisé en ce que*** la barrière (101) est disposée sur une paroi latérale du couloir (1), et le couloir (1) comprend, sur une paroi opposée, un portillon (20) pivotant entre une position d'obturation du couloir (1) et une position de dégagement du couloir (1).

4. Couloir (1) selon l'une des revendications 2 ou 3, ***caractérisé en* ce *que*** la liaison pivot de la barrière (101) et/ou du portillon (20) comprend un vérin (105) du type ferme-porte pour le ramener en position d'obturation.

5. Couloir (1) selon l'une des revendications 2 ou 3, ***caractérisé en ce que*** la liaison pivot de la barrière (101) et/ou du portillon (20) est motorisée.

6. Couloir (1) selon la revendication 5, ***caractérisé en ce que*** la motorisation comprend un limiteur d'effort.

7. Couloir (1) selon l'une des revendications 2 ou 3, ***caractérisé en ce que*** la liaison pivot comprend une butée (112) sous forme de came, limitant son amplitude entre la position d'obturation et la position de dégagement.

8. Couloir (1) selon l'une des revendications 2 ou 3, ***caractérisé en ce que*** la barrière (101) et/ou le portillon (20) présente une teinte grise et anti-reflet.

9. Couloir (1) selon la revendication 5, ***caractérisé en ce que*** la motorisation de la barrière (101) est asservie à la position du chariot (10).

10. Procédé de pilotage d'un chariot (10) de poussée d'un couloir d'amenée (1) d'animaux selon l'une des revendications précédentes, remarquable en ce qu'il consiste à faire progresser des animaux au sein du couloir (1) selon un cycle du type « pas de pèlerin », et en ce que la position d'une barrière (101) mobile depuis une position de libération du couloir (1) vers une position d'obturation du couloir (1) est asservie à la position du chariot (10) au sein du couloir (1).

## Patentansprüche

1. Ein Durchgang (1) einer landwirtschaftlichen Anlage oder eines Schlachthofs, der Durchgang (1) umfasst einen Schubwagen (10) für Tiere mittels einer Barriere (101), die zwischen einer Position, die den Durchgang (1) blockiert, und einer Position, die den Durchgang (1) freigibt, beweglich ist, wobei der Wagen (10) durch eine Gleitverbindung im Durchgang (1) beweglich ist, die Gleitverbindung umfasst Rollelemente (109), die in Kontakt mit einer oberen Fläche eines Führungselements (110) der Verbindung angeordnet sind und das gesamte oder einen Teil des Gewichts des Wagens tragen, wobei die Rollelemente (109) und/oder die obere Fläche des Führungselements ein Elastomer oder ein Polymer umfassen, **dadurch gekennzeichnet, dass** die Gleitverbindung durch ein Ritzel (108) und Zahnstangensystem (102) betätigt wird.

2. Durchgang (1) nach Anspruch 1, **dadurch gekennzeichnet, dass** die Barriere (101) schwenkbar ist.

3. Durchgang (1) nach einem der vorhergehenden Ansprüche, **dadurch gekennzeichnet, dass** die Barriere (101) an einer Seitenwand des Durchgangs (1) angeordnet ist und der Durchgang (1) an einer gegenüberliegenden Wand eine rücklaufsperre (20) umfasst, die zwischen einer Position, die den Durchgang (1) blockiert, und einer Position, die den Durchgang (1) freigibt, schwenkt.

4. Durchgang (1) nach einem der Ansprüche 2 oder 3, **dadurch gekennzeichnet, dass** die Schwenkverbindung der Barriere (101) und/oder der rücklaufsperre (20) einen Türschließzylinder (105) umfasst, um sie in die Blockierposition zurückzuführen.

5. Durchgang (1) nach einem der Ansprüche 2 oder 3, **dadurch gekennzeichnet, dass** die Schwenkverbindung der Barriere (101) und/oder der rücklaufsperre (20) motorisiert ist.

6. Durchgang (1) nach Anspruch 5, **dadurch gekennzeichnet, dass** die Motorisierung einen Kraftbegrenzer umfasst.

7. Durchgang (1) nach einem der Ansprüche 2 oder 3, **dadurch gekennzeichnet, dass** die Schwenkverbindung einen Anschlag (112) in Form einer Nocke umfasst, der ihre Amplitude zwischen der Blockierposition und der Freigabeposition begrenzt.

8. Durchgang (1) nach einem der Ansprüche 2 oder 3, **dadurch gekennzeichnet, dass** die Barriere (101) und/oder die rücklaufsperre (20) eine graue und antireflektierende Farbe hat.

9. Durchgang (1) nach Anspruch 5, **dadurch gekennzeichnet, dass** die Motorisierung der Barriere (101) durch die Position des Wagens (10) gesteuert wird.

10. Verfahren zur Steuerung eines Schubwagens (10) eines Tierdurchgangs (1) nach einem der vorhergehenden Ansprüche, **dadurch gekennzeichnet, dass** es das Bewegen von Tieren innerhalb des Durchgangs (1) gemäß einem "Pilgerschritt"-Zyklus umfasst und dass die Position einer beweglichen Barriere (101) von einer Position, die den Durchgang (1) freigibt, zu einer Position, die den Durchgang (1) blockiert, durch die Position des Wagens (10) innerhalb des Durchgangs (1) gesteuert wird.

## Claims

1. Animal passageway (1) of a farming installation or a slaughterhouse, the passageway (1) comprising a push cart (10) for animals by means of a barrier (101) movable between a position blocking the passageway (1) and a position clearing the passageway (1), the cart (10) being movable in the passageway (1) by a sliding connection, the sliding connection comprising rolling elements (109) arranged in contact with an upper face of a guiding element (110) of the connection and supporting all or part of the weight of the cart, the rolling elements (109) and/or the upper face of the guiding element comprising an elastomer or a polymer, **characterized in that** the sliding connection is actuated by a pinion (108) and rack (102) system.

2. Passageway (1) according to claim 1, **characterized in that** the barrier (101) is pivotable.

3. Passageway (1) according to one of the preceding claims, **characterized in that** the barrier (101) is arranged on a side wall of the passageway (1), and the passageway (1) comprises, on an opposite wall, an anti-return gate (20) pivoting between a position blocking the passageway (1) and a position clearing the passageway (1).

4. Passageway (1) according to one of claims 2 or 3, **characterized in that** the pivot connection of the barrier (101) and/or the anti-return gate (20) comprises a door closer type cylinder (105) to return it to the blocking position.

5. Passageway (1) according to one of claims 2 or 3, **characterized in that** the pivot connection of the barrier (101) and/or the anti-return gate (20) is motorized.

6. Passageway (1) according to claim 5, **characterized in that** the motorization includes a force limiter.

7. Passageway (1) according to one of claims 2 or 3, **characterized in that** the pivot connection comprises a stop (112) in the form of a cam, limiting its amplitude between the blocking position and the clearing position.

8. Passageway (1) according to one of claims 2 or 3, **characterized in that** the barrier (101) and/or the anti-return gate (20) has a gray and anti-reflective color.

9. Passageway (1) according to claim 5, **characterized in that** the motorization of the barrier (101) is controlled by the position of the cart (10).

10. Method for controlling a push cart (10) of an animal passageway (1) according to one of the preceding claims, **characterized in that** it involves moving animals within the passageway (1) according to a "pilgrim's step" cycle, and **in that** the position of a movable barrier (101), from a position clearing the passageway (1) to a position blocking the passageway (1), is controlled by the position of the cart (10) within the passageway (1)
